**Europäisches Patentamt**

(19) **European Patent Office**

**Office européen des brevets**

(11) Veröffentlichungsnummer: **0 345 753 B1**

# EUROPÄISCHE PATENTSCHRIFT

(12)

(45) Veröffentlichungstag der Patentschrift:
29.05.91 Patentblatt 91/22

(51) Int. Cl.$^5$: **B60T 8/00**

(21) Anmeldenummer: 89110280.8

(22) Anmeldetag: 07.06.89

(54) **Verfahren zum Regeln des Bremsdruckes in einer blockiergeschützten Fahrzeug-Bremsanlage.**

(30) Priorität: 08.06.88 DE 3819511

(43) Veröffentlichungstag der Anmeldung:
13.12.89 Patentblatt 89/50

(45) Bekanntmachung des Hinweises auf die
Patenterteilung:
29.05.91 Patentblatt 91/22

(84) Benannte Vertragsstaaten:
DE ES FR GB IT

(56) Entgegenhaltungen:
EP-A- 0 175 201
DE-A- 3 540 708
DE-A- 3 642 008
FR-A- 2 509 243
US-A- 3 482 887

(73) Patentinhaber: LUCAS INDUSTRIES public
limited company
Great King Street
Birmingham, B19 2XF West Midlands (GB)

(72) Erfinder: Braschel, Volker
Fliedergarten 57
W-5450 Neuwied 1 (DE)
Erfinder: Schmitt, Hubert
Mohlenweg 40
W-5405 Ochtendung (DE)
Erfinder: Krohn, Hellmut
Hohenackerstrasse 24/IV
W-7300 Esslingen (DE)
Erfinder: Roller, Dieter
Höhenstrasse 14
W-5450 Neuwied 12 (DE)

(74) Vertreter: von Hellfeld, Axel, Dr. Dipl.-Phys., et
al
WUESTHOFF & WUESTHOFF
Schweigerstrasse 2
W-8000 München 90 (DE)

**Beschreibung**

Die Erfindung betrifft ein Verfahren zum Regeln des Bremsdruckes in einer blockiergeschützten Fahrzeug-Bremsanlage, bei dem die Drehgeschwindigkeiten der gebremsten Räder gemessen und daraus deren Drehverzögerungen berechnet werden und dann, wenn der Schlupf eines Rades in bezug zu einer normalerweise von der Drehgeschwindigkeit zumindest eines Rades abhängigen Referenzgeschwindigkeit beziehungsweise die Drehverzögerung eines Rades jeweils vorgegebene Schwellwerte überschreiten, der Bremsdruck an diesem Rad abgebaut wird.

In der ABS-Regeltechnik ist es bekannt, zur Erzeugung der Regelsignale eine sogenannte Fahrzeug-Referenzgeschwindigkeit zu bilden, welche im Idealfall möglichst nahe an der nicht direkt meßbaren, tatsächlichen Fahrzeuggeschwindigkeit liegen soll. Gewöhnlich wird die Fahrzeugreferenzgeschwindigkeit in Abhängigkeit von der Umfangsgeschwindigkeit des sich am schnellsten drehenden nicht angetriebenen Rades des Fahrzeuges gebildet.

Der Schlupf jedes einzelnen gebremsten Rades wird in bezug auf die Fahrzeugreferenzgeschwindigkeit gebildet und dient neben der Drehverzögerung (einschließlich der Drehbeschleunigung) des Rades als Regelgröße, d.h. der Abbau und Aufbau des Bremsdrukkes an dem betreffenden Rad wird in Abhängigkeit davon geregelt, ob der Schlupf des Rades bzw. seine Drehverzögerung vorgegebene Schwellwerte überschreiten.

Im wesentlichen erfolgt die Regelung derart, daß dann, wenn die Drehgeschwindigkeit des gebremsten Rades stark hinter der obengenannten Referenzgeschwindigkeit zurückbleibt (negativer Schlupf) oder wenn das Rad Drehverzögerungswerte erreicht, die größer sind als ein vorgegebener Wert, ein Abbau des Bremsdruckes an dem betroffenen Rad durchgeführt wird, bis das Rad wieder hinreichend beschleunigt. Sowohl für den negativen Schlupf als auch die Drehverzögerung werden Schwellwerte vorgegeben. Der Schwellwert für den Schlupf kann beispielsweise bei 50% liegen und der Schwellwert für die Drehverzögerung wird für das gegebene Fahrzeug anhand der physikalisch maximal möglichen Fahrzeugverzögerung gebildet, d.h. es wird für optimale Reifen- und Straßenverhältnisse (gute Reibung) bei einer gegebenen Fahrzeuggeschwindigkeit ermittelt, welche Verzögerung das Fahrzeug bestenfalls bei einer optimalen Bremsung erreichen kann und in Abhängigkeit davon wird der Schwellwert bezüglich der Drehverzögerung jedes einzelnen Rades ermittelt.

Diese Zusammenhänge sind dem Fachmann bekannt und z.B. in BOSCH TECHNISCHE BERICHTE, Bd. 7, 1980, Heft 2, Seiten 78-83 (entsprechend BOSCH TECHNOLOGICAL REPORTS, English special edition, February 1982, ISSN 0006-798 X) beschrieben.

Es ist möglich, daß bei einer Bremsung alle Räder des Fahrzeuges gleichzeitig "instabil" werden, d.h. alle Räder erfahren eine Drehverzögerung, die deutlich über der maximal möglichen Fahrzeugverzögerung von z.B. –1,5 g liegt. Dies ist insbesondere bei einer Panikbremsung oder einer Bremsung auf glattem Untergrund möglich. In diesem Falle ist es auch im Stand der Technik schon bekannt, die Referenzgeschwindigkeit nicht mehr anhand der Drehgeschwindigkeit des am langsamsten drehenden Rades, sondern rein rechnerisch für eine bestimmte Zeitspanne anhand der physikalisch maximal möglichen Fahrzeugverzögerung zu bilden. An den einzelnen Rädern wird dann solange der Bremsdruck abgebaut, wie sich die Drehgeschwindigkeit eines Rades im deutlichen Schlupf (von z.B. 50%) gegenüber der derart gebildeten Referenzgeschwindigkeit befindet.

Die Erfindung beschäftigt sich nun mit Problemen, die bei ABS-Regelungen auftreten können, wenn Raddrehzahlsignale nur von angetriebenen Rädern des Fahrzeuges zur Verfügung stehen und diese durchdrehen, beispielsweise wenn der Fahrer auf relativ glatter Fahrbahn stark Gas gibt oder auch an einem Hang aufwärts beschleunigen will.

Bei einem derartigen Durchdrehen der angetriebenen Räder liefern deren Drehzahlsensoren Geschwindigkeitssignale und die hieraus in bekannter Weise gebildete Referenzgeschwindigkeit wird mit einer begrenzten Steigung folgen, und zwar auch dann, wenn die Drehbeschleunigungen der Räder die maximal mögliche Fahrzeugbeschleunigung übertreffen, jedenfalls sind herkömmlicherweise ABS-Regelanlagen derart programmiert, da ein Fahrzeug auch mit durchdrehenden Rädern beschleunigen kann, sofern ein hinreichender Reibbeiwert gegeben ist. In einem solchen Fall weicht also die rein rechnerisch aus den Drehgeschwindigkeiten der Räder gebildete Referenzgeschwindigkeit von der tatsächlichen Fahrzeuggeschwindigkeit deutlich ab, was erhebliche Probleme bei der ABS-Regelung bedingen kann.

Noch kritischer kann ein Durchdrehen der Räder auf schlüpfriger Oberfläche sein, da in diesem Fall das Fahrzeug nur sehr gering beschleunigt wird, insbesondere dann, wenn an einem Hang bergauf angefahren wird. Wenn die Hang-Abtriebskraft die mittels der Reifen auf die Fahrbahn übertragene Antriebskraft kompensiert, kann das Fahrzeug trotz drehender Räder auf der Stelle stehen bleiben oder gar rückwärts rutschen. In diesem Falle hat die rein rechnerisch erzeugte Fahrzeugreferenzgeschwindigkeit nichts mehr mit der tatsächlichen Fahrzeuggeschwindigkeit zu tun, was ebenfalls für die ABS-Regelung ein höchst unguter Zustand ist.

Gibt in einer der vorstehend beschriebenen Situationen der Fahrer über eine längere Zeitspanne stark Gas, so kann die Diskrepanz zwischen der errechneten Referenzgeschwindigkeit und der tatsächlichen Fahrzeuggeschwindigkeit sehr groß werden, insbesondere dann, wenn die Räder unter der physikalisch maximal möglichen Fahrzeugbeschleunigung durchdrehen (zum Beispiel wenn die Drehbeschleunigung der Räder geringer ist als 0,4 g). In diesem Fall sind herkömmliche ABS-Rechner so programmiert, daß die Referenzgeschwindigkeit fälschlich sehr schnell ansteigt, da der Rechner das Durchdrehen der Räder dann nicht erkennen kann.

Steigt bei einem derartigen Durchdrehen der Räder der Fahrer vom Gaspedal auf die Bremse um, so wird die Drehgeschwindigkeit der Räder sehr schnell verzögert während die Referenzgeschwindigkeit noch relativ hoch liegt. Der ABS-Rechner erkennt deshalb einen sehr hohen Schlupf sowie eine große Drehverzögerung und reagiert deshalb mit einem Abbau des Bremsdruckes an den betreffenden Rädern. Dies kann eine wesentliche Unterbremsung des Fahrzeuges bedeuten (also ein Verschenken von Bremsweg) oder aber auch am Hang ein ungewolltes Rückwärtsrollen des Fahrzeuges zur Folge haben.

Durchdrehende Räder können also bei einer ABS-Regelanlage Probleme bringen, wenn nur sie Drehzahlsignale liefern. Nimmt der Fahrer nach einem Durchdrehen der Räder den Fuß vom Gaspedal, so erfahren die Räder, je nach Reibbeiwert der Fahrbahn, eine deutliche Drehverzögerung. Erfolgt dann eine Bremsung, so können die vorgegebenen Schwellwerte bezüglich der Drehverzögerung und-/oder des Schlupfes schnell überschritten und durch die ABS-Regelung der Bremdruck abgebaut werden, obwohl dies nicht erforderlich ist. Es kommt also zu einer Unterbremsung.

Der Erfindung liegt die Aufgabe zugrunde, ein ABS-Regelverfahren anzugeben, das auch bei durchdrehenden Rädern und einem anschließenden Bremsvorgang eine optimale Bremsung ermöglicht.

Ein Durchdrehen der Räder und ein anschließendes Betätigen der Bremse ist sowohl während einer Fahrt auf ebener Fahrbahn als auch beim Anfahren an einem Hang denkbar.

Erfindungsgemäß wird diese Aufgabe dadurch gelöst, daß dann, wenn ohne Betätigung der Bremse die Drehverzögerung eines Rades einen vorgegebenen Schwellwert überschreitet, die Referenzgeschwindigkeit nach einer vorgebbaren Zeitspanne an die Drehgeschwindigkeit des am langsamsten drehenden Rades des Fahrzeuges angepaßt wird.

In einer anderen Variante der Erfindung ist vorgesehen daß dann, wenn ohne Betätigung der Bremse der Schlupf einen vorgegebenen negativen Schwellwert überschreitet, die Referenzgeschwindigkeit nach einer vorgegebenen Zeitspanne an die Drehgeschwindigkeit des am langsamsten drehenden Rades des Fahrzeuges angepaßt wird.

Die beiden vorstehenden Varianten der Erfindung können kombiniert werden, d.h. als Bedingung für das Vorgeben einer Zeitspanne, nach welcher die Referenzgeschwindigkeit an die Geschwindigkeit des langsamsten Rades angepaßt wird, werden sowohl der Schlupf als auch die Drehverzögerung herangezogen.

Weitere vorteilhafte Ausgestaltungen der Erfindung sind in den Unteransprüchen beschrieben.

Im Sinne dieser Anmeldung ist unter "positivem Schlupf" grundsätzlich ein Treibschlupf (Antrieb) und unter "negativem Schlupf" ein Bremsschlupf zu verstehen.

Der Begriff "Referenzgeschwindigkeit" im Sinne dieser Anmeldung kann sowohl als "Fahrzeugreferenzgeschwindigkeit" als auch als "Radreferenzgeschwindigkeit" verstanden werden. Die beiden letztgenannten Begriffe sind dem Fachmann bekannt.

Erfindungsgemäß erfolgt also eine Anpassung der Referenzgeschwindigkeit nach Ablauf einer vorgebbaren, gegebenenfalls in Abhängigkeit von bestimmten Parametern änderbaren Zeitspanne an die Drehgeschwindigkeit des am langsamsten drehenden Rades des Fahrzeuges. Während der Zeitspanne (also bis zur vorstehend beschriebenen Anpassung) wird die Referenzgeschwindigkeit in bekannter Weise mit möglichst plausiblen Werten simuliert.

In einer weiteren bevorzugten Ausgestaltung der Erfindung ist vorgesehen, daß die vorgegebene Zeitspanne in Abhängigkeit davon eingestellt wird, wie lange das Rad braucht, um vom Spitzenwert der Drehverzögerung einen vorgegebenen, geringeren Drehverzögerungswert zu erreichen. Der geringere Drehverzögerungswert kann z.B.−1 g betragen.

Eine weitere Verbesserung der Anpassung der Fahrzeugreferenzgeschwindigkeit nach einem Durchdrehen der Räder und einer anschließenden Bremsbetätigung ergibt sich dann, wenn die Zeitspanne mittels eines Zeitgliedes vorgegeben wird, dessen Ablauf dann unterbrochen wird, wenn die Drehverzögerung des Rades grösser ist als ein vorgegebener Wert. Der vorgegebene Wert kann z.B.−1,5 g betragen.

Eine weitere Verbesserung der Anpassung ergibt sich dadurch, daß die Zeitspanne mittels eines Zeitgliedes vorgegeben wird, dessen Ablauf dann unterbrochen wird, wenn die Drehbeschleunigung des Rades größer ist als ein vorgegebener Wert. Der vorgegebene Wert kann z.B. 0,6 g betragen.

Aus der DE-C 27 40 419 ist es bekannt, bei Auftreten eines positiven Schlupfsignals (wobei der Begriff "positiver Schlupf" wie oben definiert ist) die Regelung zu sperren. Damit soll ein Überschwingen der Radgeschwindigkeiten über die Fahrzeuggeschwindigkeit verhindert werden.

Aus der DE-C 27 06 132 ist es bekannt, zur Bildung einer Gesamt-Referenzgeschwindigkeit das schnellste Rad des Fahrzeuges heranzuziehen. Entsprechendes gilt für die DE-A 33 45 730.

Nachfolgend werden Ausführungsbeispiele der Erfindung anhand der Zeichnung näher erläutert. Es zeigt :

Fig. 1 über einer gemeinsamen Zeitskala verschiedene Meß- und Regelgrößen eines Regelalgorithmus zum Einstellen der Fahrzeugreferenzgeschwindigkeit bei Durchdrehen eines Rades und anschließendem Bremsen während der Fahrt, und

Fig. 2 über einer gemeinsamen Zeitskala die Meß- und Regelgrößen für einen Regelalgorithmus zum Anpassen der Fahrzeugreferenzgeschwindigkeit bei Durchdrehen der Räder und anschließendem Bremsen beim Anfahren an einem Hang.

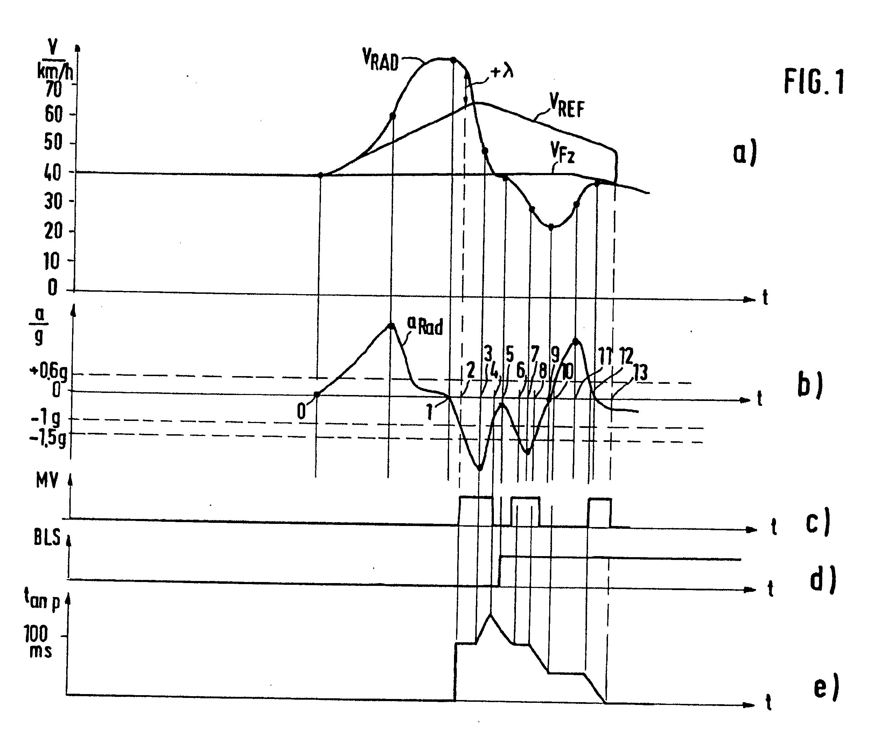

Die Fig. 1a bis 1e weisen als Abszisse eine gemeinsame Zeitskala t auf. In Fig. 1a sind der zeitliche Verlauf einer typischen Radgeschwindigkeit $v_{Rad}$, der berechneten Fahrzeugreferenzgeschwindigkeit $v_{Ref}$ und der angenommenen tatsächlichen Fahrzeuggeschwindigkeit $v_{Fz}$ aufgetragen. Die Geschwindigkeiten sind in km/h angegeben.

In Fig. 1b ist die durch Bildung der ersten Ableitung der Radgeschwindigkeit (Umfangsgeschwindigkeit, welche sich aus der Drehgeschwindigkeit ergibt) über der Zeit erhaltene Radverzögerung $a_{Rad}$ aufgetragen, wobei wesentliche Zeitpunkte mit den Zahlen 0, 1... 13 markiert sind. Die Radverzögerung (bzw. Beschleunigung) ist in Einheiten von g (Erdbeschleunigung) aufgetragen.

Fig. 1c zeigt ein Steuersignal MV, mit dem ein Magnetventil zum Abbau des Bremsdruckes angesteuert wird.

Fig. 1d zeigt den zeitlichen Verlauf einer Bremsbetätigung, welche hier in einfacher Weise dadurch festgestellt wird, daß ein Bremslichtschaltersignal BLS vorliegt.

Fig. 1e zeigt den zeitlichen Verlauf eines Anpassungs-Zeitgliedes $t_{anp}$, welches weiter unten noch erläutert wird.

Es wird angenommen, daß das betrachtete Rad des Fahrzeuges während einer Fahrt durchdreht, also sich wesentlich schneller dreht als es der tatsächlichen Fahrzeuggeschwindigkeit entspricht. Das Durchdrehen beginne gemäß Fig. 1a zum Zeitpunkt 0. Zum Zeitpunkt 1 endet die positive Radbeschleunigung (Fig. 1b). Wie dargestellt, liegt während des Durchdrehens die Radumfangsgeschwindigkeit $v_{Rad}$ deutlich über der tatsächlichen Fahrzeuggeschwindigkeit $v_{Fz}$. Die Fahrzeugreferenzgeschwindigkeit $v_{Ref}$ wird in herkömmlicher Weise ermittelt und liegt gemäß Fig. 1a zunächst zwischen der Radgeschwindigkeit $v_{Rad}$ und der Fahrzeuggeschwindigkeit $v_{Fz}$. Das Rad weist dabei zunächst einen positiven Schlupf auf weil es sich schneller dreht als die Referenzgeschwindigkeit $v_{Ref}$.

Da der Fahrer das Durchdrehen des Rades bemerkt, nimmt er das Gaspedal zurück (zum Zeitpunkt 1) und je nach Reibbeiwert der Fahrbahn erfährt das Rad eine starke Drehverzögerung, die zum Zeitpunkt 2 bei Erreichen eines in herkömmlicher Weise vorgegebenen Schwellwertes das Magnetventil-Steuersignal $M_v$ auslöst, so daß Bremsdruck abgebaut würde. Zu dem Zeitpunkt 2 hat der Fahrer die Bremse noch nicht betätigt (siehe Fig. 1d). Weil der Fahrer zum Zeitpunkt 2 die Bremse noch nicht betätigt hat und gleichzeitig zum Zeitpunkt 2 ein positiver Schlupf + $\lambda$(Fig. 1a) von im Ausführungsbeispiel 10 km/h vorliegt (der Schlupf also größer ist als ein vorgegebener Schwellwert von z.B. 5 km/h), wird zum Zeitpunkt 2 ein Zeitglied gestartet, welches eine Zeitspanne $t_{anp}$ steuert. Das Zeitglied läuft nun mit den weiter unten beschriebenen Unterbrechungen und-/oder Verlängerungen ab. Nach seinem Ablauf wird die Referenzgeschwindigkeit neu eingestellt.

Zum Zeitpunkt 5 tritt der Fahrer auf die Bremse (Fig. 1d). Das Rad erfährt nun einen negativen Bremsschlupf.

Die Ausgangszeitspanne $t_{anp}$ des Zeitgliedes ist im Ausführungsbeispiel auf 100 ms eingestellt und wird verlängert um die Zeitspanne zwischen dem Spitzenwert der Radverzögerung (Minimum zum Zeitpunkt 3) und dem Erreichen eines vorgegebenen Schwellwertes von z.B. –1 g zum Zeitpunkt 4 (Fig. 1b).

Vom Zeitpunkt 4 läuft die vorgegebene Zeitspanne $t_{anp}$ ab. Der Zeitablauf wird aber gemäß Fig. 1e unterbrochen, wenn die Drehverzögerung einen gegebenen Schwellwert von z.B. –1,5 g zwischen den Zeitpunkten 6 und 8 überschreitet. Ebenso wird der Ablauf des Zeitgliedes unterbrochen, wenn die Drehbeschleunigung des Rades einen vorgegebenen Schwellenwert von z.B. +0,6 g zwischen den Zeitpunkten 10 und 12 überschreitet.

Das vorstehend beschriebene Messen der Zeitspanne zwischen dem Spitzenwert der Radverzögerung (Zeitpunkt 3) und dem Erreichen eines vorgegebenen Schwellwertes (Zeitpunkt 4) und die entsprechende Verlängerung der vorab eingestellten Zeitspanne $t_{anp}$ des Zeitgliedes sowie das Unterbrechen des Ablaufens des Zeitgliedes hat folgende Gründe :

Dreht während der Fahrt ein Rad durch und wird es anschließend sofort gebremst, so würde nach Ablauf der vorab eingestellten Zeitspanne $t_{anp}$ von z.B. 100 ms die Referenzgeschwindigkeit einer Radgeschwindigkeit angepaßt, welche wegen des Bremsschlupfes wesentlich zu tief liegen würde. Befindet sich jedoch das Rad in einem Brems-Regelzyklus, so werden die oben erwähnten Schwellwerte bezüglich der Rad-Beschleunigung bzw. -Verzögerung überschritten und der Ablauf des Zeitgliedes angehalten. Die Zeitspanne zwischen dem Spitzenwert der Radverzögerung und dem Erreichen des Schwellwertes von z.b.–1 g beträgt typischerweise einige 10 ms. Um diese Zeitspanne verlängert sich die Anpassungszeitspanne $t_{anp}$, so daß sich die Drehgeschwindigkeit des Rades besser an die tatsächliche Fahrzeuggeschwindigkeit anpassen kann.

Bei einem Anfahren am Hang mit durchdrehenden Rädern werden die Radgeschwindigkeiten bei einem anschließenden Bremsvorgang innerhalb von 100 ms den Wert 0 annehmen und somit die obengenannten Schwellwerte bezüglich der Beschleunigung nicht erreichen.

Auch ist in diesem Fall die Zeitspanne zwischen dem Spitzenwert der Radverzögerung und dem Erreichen des Schwellwertes von z.B. $-1$ g sehr gering. Das Zeitglied wird also in einem solchen Fall schnell ablaufen und ein schnelles Anpassen der Referenzgeschwindigkeit an die niedrigste Radgeschwindigkeit, in diesem Falle 0, ermöglichen.

Zum Zeitpunkt 13 ist die Zeitspanne $t_{anp}$ abgelaufen und es wird nun gemäß Fig. 1a die Referenzgeschwindigkeit $v_{Ref}$ in herkömmlicher Weise an die Radgeschwindigkeit des am langsamsten drehenden Rades angepaßt, Somit wird eine Unterbremsung des Fahrzeuges vermieden.

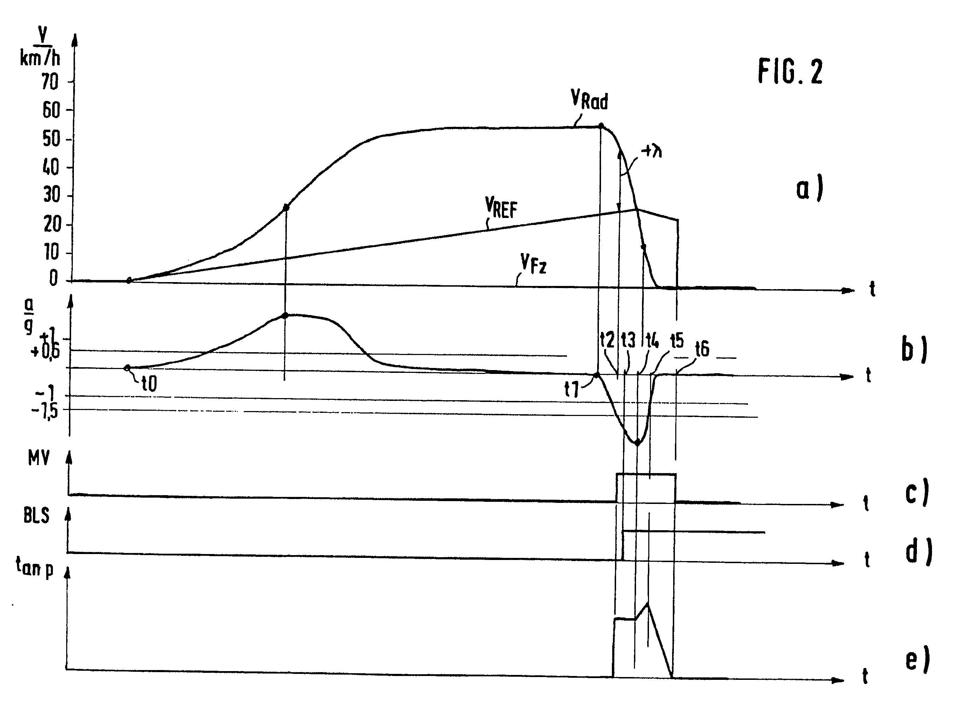

Fig. 2 zeigt die Fig. 1 entsprechenden Meß- und Regelgrößen in gleicher Darstellung für einen Anfahrvorgang am Hang mit durchdrehenden Rädern und anschließender Bremsung.

Das Durchdrehen beginne zum Zeitpunkt 0. Zum Zeitpunkt 1 wird Gas weggenommen. Wie oben bereits beschrieben, steigt in herkömmlicher Weise die Referenzgeschwindigkeit $v_{Ref}$ und es tritt eine erhebliche Diskrepanz zur tatsächlichen Fahrzeuggeschwindigkeit $v_{Fz}$ auf. Das Rad durchläuft während des Durchdrehens einen erheblichen positiven Schlupf $\lambda$.

Das Zurücknehmen des Gaspedals erzeugt aufgrund der Reibung des Reifens mit der Fahrbahn eine Radverzögerung nach dem Zeitpunkt 1, die zum Zeitpunkt 2 einen vorgegebenen Schwellwert erreichte. Die Magnetventilsteuerung erzeugt dann das Signal MV (Fig. 2c), durch welches ein Abbau des Bremsdruckes ausgelöst würde. Zum Zeitpunkt 2 hat der Fahrer die Bremse noch nicht betätigt (kein Lichtschaltersignal BLS). Weil auch noch ein positiver Schlupf von 10 km/h zum Zeitpunkt 2 vorhanden ist, wird zu diesem Zeitpunkt das Zeitglied geladen und beginnt mit dem Ablaufen. Die momentan geltende Zeitspanne des Zeitgliedes ist, wie oben, mit $t_{anp}$ bezeichnet.

Gemäß Fig. 2e wird die vorab eingestellte Zeitspanne von z.B. 100 ms zwischendurch einmal verlängert, nämlich um die Zeitspanne zwischen den Zeitpunkten 4 und 5, die das Rad zwischen dem Spitzenwert der Radverzögerung (4) und dem Erreichen eines Schwellwertes von z.B.$-1$ g (5) verbringt.

Ab dem Zeitpunkt 5 läuft das Zeitglied kontinuierlich ab und wird, im Unterschied zum Ausführungsbeispiel gemäß Fig. 1, nicht mehr unterbrochen, da keine Radbeschleunigungssignale größer als $+0,6$ g und auch keine Radverzögerungssignale größer als$-1,5$ g erzeugt werden. Somit läuft die Anpassungszeitspanne $t_{anp}$ relativ schnell ab und zum Zeitpunkt 6 ist die Referenzgeschwindigkeit $v_{Ref}$ bereits an die Radgeschwindigkeit des am langsamsten drehenden angetriebenen Rades angepaßt. Auf diese Weise wird vermieden, daß das Fahrzeug beim Anfahren am Hang mit durchdrehenden Rädern und einer anschließenden Bremsung längere Zeit drucklos bleibt und unkontrolliert rückwärts rollen kann.

Die vorstehende Beschreibung beschränkt sich auf das wesentliche der Erfindung. Die erforderlichen Hardware-Mittel (im weitesten Sinn) einschließlich der Sensoren etc. sind dem Fachmann bekannt. Die Erfindung läßt sich durch eine entsprechende Programmierung eines in einer ABS-Anlage vorgesehenen Rechners realisieren.

## Ansprüche

1. Verfahren zum Regeln des Bremsdruckes in einer blockiergeschützten Fahrzeug-Bremsanlage, bei dem die Drehgeschwindigkeiten ($v_{Rad}$) der gebremsten Räder gemessen und daraus eine Referenzgeschwindigkeit ($v_{Ref}$) und die Drehverzögerungen (a) der Räder berechnet werden und dann, wenn der Schlupf eines Rades in bezug zu der Referenzgeschwindigkeit ($v_{Ref}$) und/oder die Drehverzögerung eines Rades jeweils vorgegebene Schwellwerte überschreiten, der Bremsdruck an diesem Rad abgebaut wird, dadurch **gekennzeichnet**, daß dann, wenn ohne Betätigung der Bremse die Drehverzögerung (a) eines Rades einen vorgegebenen Schwellwert überschreitet, die Referenzgeschwindigkeit ($v_{Ref}$) nach einer vorgebbaren Zeitspanne ($t_{anp}$) an die Drehgeschwindigkeit des am langsamsten drehenden Rades des Fahrzeuges angepaßt wird.

2. Verfahren zum Regeln des Bremsdruckes in einer blockiergeschützten Fahrzeug-Bremsanlage, bei dem die Drehgeschwindigkeiten ($v_{Rad}$) der gebremsten Räder gemessen und daraus eine Referenzgeschwindigkeit ($v_{Ref}$) und die Drehverzögerungen (a) der Räder berechnet werden und dann, wenn der Schlupf eines Rades in bezug zu der Referenzgeschwindigkeit ($v_{Ref}$) und/oder die Drehverzögerung eines Rades jeweils vorgegebene Schwellwerte überschreiten, der Bremsdruck an diesem Rad abgebaut wird, dadurch **gekennzeichnet**, daß dann, wenn ohne Betätigung der Bremse der Schlupf ($\lambda$) einen vorgegebenen negativen Schwellwert überschreitet, die Referenzgeschwindigkeit ($v_{Ref}$) nach einer vorgegebenen Zeitspanne ($t_{anp}$) an die Drehgeschwindigkeit des am langsamsten drehenden Rades des Fahrzeuges angepaßt wird.

3. Verfahren nach einem der Ansprüche 1 oder 2, dadurch **gekennzeichnet**, daß dann, wenn ohne Betätigung der Bremse die Drehverzögerung (a) und der Schlupf ($\lambda$) vorgegebene Schwellwerte über-

schreiten, die Referenzgeschwindigkeit ($v_{Ref}$) nach einer vorgegebenen Zeitspanne ($t_{anp}$) an die Drehgeschwindigkeit des am langsamsten drehenden Rades angepaßt wird.

4. Verfahren nach einem der Ansprüche 1 bis 3, dadurch **gekennzeichnet**, daß die Anpassung der Referenzgeschwindigkeit ($v_{Ref}$) an die Drehgeschwindigkeit des am langsamsten drehenden angetriebenen Rades erfolgt.

5. Verfahren nach einem oder mehreren der Ansprüche 1, 2 oder 3, dadurch **gekennzeichnet**, daß dann, wenn ohne Betätigung der Bremse der Schlupf ($\lambda$) und/oder die Drehverzögerung einen vorgegebenen Schwellwert überschreitet, anschließend die Referenzgeschwindigkeit ($v_{Ref}$) nach Ablauf einer vorgegebenen Zeitspanne ($t_{anp}$) an die Drehgeschwindigkeit des sich am langsamsten drehenden Rades angepaßt wird, falls während dieser Zeitspanne ($t_{anp}$) die Bremse betätigt wurde.

6. Verfahren nach Anspruch 1, dadurch **gekennzeichnet**, daß dann, wenn ohne Betätigung der Bremse die Drehverzögerung eines Rades einen vorgegebenen Schwellwert überschreitet, die Referenzgeschwindigkeit ($v_{Ref}$) nach Ablauf einer vorgegebenen Zeitspanne ($t_{anp}$) an die Drehgeschwindigkeit des sich am langsamsten drehenden Rades des Fahrzeuges angepaßt wird, falls bei Erreichen des Drehverzögerungsschwellwertes ein positiver Schlupf vorlag.

7. Verfahren nach einem der vorhergehenden Ansprüche, dadurch **gekennzeichnet**, daß die vorgegebene Zeitspanne ($t_{anp}$) in Abhängigkeit davon eingestellt wird, wie lange das Rad braucht, um vom Spitzenwert der Drehverzögerung (a) einen vorgegebenen, geringeren Drehverzögerungswert zu erreichen.

8. Verfahren nach einem der vorhergehenden Ansprüche, dadurch **gekennzeichnet**, daß die Zeitspanne ($t_{anp}$) mittels eines Zeitgliedes vorgegeben wird, dessen Ablauf dann unterbrochen wird, wenn die Drehverzögerung des Rades größer ist als ein vorgegebener Wert.

9. Verfahren nach einem der vorhergehenden Ansprüche, dadurch **gekennzeichnet**, daß die Zeitspanne ($t_{anp}$) mittels eines Zeitgliedes vorgegeben wird, dessen Ablauf dann unterbrochen wird, wenn die Drehbeschleunigung des Rades größer ist als ein vorgegebener Wert.

## Claims

1. Method for controlling the brake pressure in an anti-lock vehicle braking system in which the rotational velocities ($v_{Rad}$) of the braked wheels are measured and therefrom a reference velocity ($v_{Ref}$) and the angular retardations (a) thereof calculated and when the slip of a wheel exceeds a threshold value predetermined with respect to the reference velocity ($v_{Ref}$) and/or the angular retardation of a wheel exceeds a predetermined threshold value the brake pressure at said wheel is reduced, characterized in that when without actuation of the brake the angular retardation (a) of a wheel exceeds a predetermined threshold value the reference velocity ($v_{Ref}$) after a predeterminable period of time ($t_{anp}$) is adapted to the rotational velocity of the slowest rotating wheel of the vehicle.

2. Method for controlling the brake pressure in an anti-lock vehicle braking system in which the rotational velocities ($v_{Rad}$) of the braked wheels are measured and therefrom a reference velocity ($v_{Ref}$) and the angular retardations (a) thereof calculated and when the slip of a wheel exceeds a threshold value predetermined with respect to the reference velocity ($v_{Ref}$) and/or the angular retardation of a wheel exceeds a predetermined threshold value the brake pressure at said wheel is reduced, characterized in that when without actuation of the brake the slip ($\lambda$) exceeds a predetermined negative threshold value the reference velocity ($v_{Ref}$) after a predetermined period of time ($t_{anp}$) is adapted to the rotational velocity of the slowest rotating wheel of the vehicle.

3. Method according to any one of claims 1 or 2, characterized in that then without actuation of the brake the angular retardation (a) and the slip ($\lambda$) exceed predetermined threshold values the reference velocity ($v_{Ref}$) after a predetermined period of time ($t_{anp}$) is adapted to the rotational velocity of the slowest rotating wheel.

4. Method according to any one of claims 1 to 3, characterized in that the reference velocity ($v_{Ref}$) is adapted to the rotational velocity of the slowest rotating driven wheel.

5. Method according to one or more of claims 1, 2 or 3, characterized in that when without actuation of the brake the slip ($\lambda$) and/or the angular retardation exceeds a predetermined threshold value the reference velocity ($v_{Ref}$) is thereafter adapted after expiry of a predetermined period of time ($t_{anp}$) to the rotational velocity of the slowest rotating wheel if during said period ($t_{anp}$) the brake has been actuated.

6. Method according to claim 1, characterized in that when without actuation of the brake the angular retardation of a wheel exceeds a predetermined threshold value the reference velocity ($v_{Ref}$) after expiry of a predetermined period of time ($t_{anp}$) is adapted to the rotational velocity of the slowest rotating wheel of the vehicle if on reaching the angular retardation threshold value a positive slip was present.

7. Method according to any one of the preceding claims, characterized in that the predetermined period ($t_{anp}$) is set in dependence on how long the wheel needs, starting from the peak value of the angular retardation (a), to reach a predetermined smaller angular retardation value.

8. Method according to any one of the preceding claims, characterized in that the period ($t_{anp}$) is predefined by means of a timer of which the rundown is interrupted when the angular retardation of the wheel is greater than a predetermined value.

9. Method according to any one of the preceding claims, characterized in that the period ($t_{anp}$) is predefined by means of a timer of which the rundown is interrupted when the angular acceleration of the wheel is greater than a predetermined value.

## Revendications

1. Procédé de régulation de la pression de freinage dans une installation de freinage de véhicule à système antiblocage, selon lequel on mesure les vitesses de rotation ($V_{Rad}$) des roues freinées, à partir de quoi on calcule une vitesse de référence ($V_{Ref}$) et les décélérations de rotation (a) des roues, puis, si le glissement d'une roue par rapport à la vitesse de référence ($V_{Ref}$) et/ou la décélération de rotation d'une roue dépassent des valeurs de seuil allouées respectives, on supprime la pression de freinage sur cette roue, **caractérisé** en ce que, si la décélération de rotation (a) d'une roue dépasse une valeur de seuil allouée sans que les freins soient actionnés, la vitesse de référence ($V_{Ref}$) est adaptée, au bout d'un intervalle de temps allouable ($t_{anp}$), à la vitesse de rotation de la roue du véhicule qui tourne le plus lentement.

2. Procédé de régulation de la pression de freinage dans une installation de freinage de véhicule à système antiblocage, selon lequel on mesure les vitesses de rotation ($V_{Rad}$) des roues freinées, à partir de quoi on calcule une vitesse de référence ($V_{Ref}$) et les décélérations de rotation (a) des roues, puis, si le glissement d'une roue par rapport à la vitesse de référence ($V_{Ref}$) et/ou la décélération de rotation d'une roue dépassent des valeurs de seuil allouées respectives, on supprime la pression de freinage sur cette roue, **caractérisé** en ce que, si le glissement ($\lambda$) dépasse une valeur de seuil négative allouée sans que les freins soient actionnés, la vitesse de référence ($V_{Ref}$) est adaptée, au bout d'un intervalle de temps alloué ($t_{anp}$), à la vitesse de rotation de la roue du véhicule qui tourne le plus lentement.

3. Procédé selon la revendication 1 ou 2 caractérisé en ce que, si la décélération de rotation (a) et le glissement ($\lambda$) dépassent des valeurs de seuil allouées sans que les freins soient actionnés, la vitesse de référence ($V_{Ref}$) est adaptée, au bout d'un intervalle de temps alloué ($t_{anp}$), à la vitesse de rotation de la roue qui tourne le plus lentement.

4. Procédé selon l'une des revendications 1 à 3, caractérisé en ce que la vitesse de référence ($V_{Ref}$) est adaptée à la vitesse de rotation de la roue motrice qui tourne le plus lentement.

5. procédé selon une ou plusieurs des revendications 1, 2, ou 3, caractérisé en ce que, si le glissement ($\lambda$) et/ou la décélération de rotation dépasse une valeur de seuil allouée sans que les freins soient actionnés, la vitesse de référence ($V_{Ref}$) est, au bout d'un intervalle de temps alloué ($t_{anp}$), adaptée à la vitesse de rotation de la roue qui tourne le plus lentement si les freins ont été actionnée pendant cet intervalle de temps ($t_{anp}$).

6. Procédé selon la revendication 1, caractérisé en ce que, si la décélération de rotation d'une roue dépasse une valeur de seuil allouée sans que les freins soient actionnés, la vitesse de référence ($V_{Ref}$) est, au bout d'un intervalle de temps alloué ($t_{anp}$), adaptée à la vitesse de rotation de la roue du véhicule qui tourne le plus lentement si un glissement positif était présent à l'atteinte de la valeur de seuil de décélération de rotation.

7. Procédé selon l'une des revendications précédentes, caractérisé en ce que l'intervalle de temps alloué ($t_{anp}$) est réglé en fonction du temps que met la roue pour atteindre, à partir de la valeur de crête de la décélération de rotation (a), une valeur de décélération de rotation inférieure allouée.

8. Procédé selon l'une des revendications précédentes, caractérisé en ce que l'intervalle de temps ($t_{anp}$) est alloué à l'aide d'un relais temporisateur dont le fonctionnement est interrompu lorsque la décélération de rotation de la roue est supérieure à une valeur allouée.

9. Procédé selon l'une des revendications précédentes, caractérisé en ce que l'intervalle de temps ($t_{anp}$) est alloué à l'aide d'un relais temporisateur dont le fonctionnement est interrompu lorsque l'accélération de rotation de la roue est supérieure à une valeur allouée.

EP 0 345 753 B1

FIG.1

FIG. 2

a)

b)

c)

d)

e)

EP 0 345 753 B1